# EUROPÄISCHE PATENTSCHRIFT

(11) **EP 2 375 871 B1**
(45) Veröffentlichungstag und Bekanntmachung des Hinweises auf die Patenterteilung: **13.09.2017**
(21) Anmeldenummer: 11161523.3
(22) Anmeldetag: 07.04.2011
(51) Int. Cl.: H05B 37/02

(54) **Verfahren zur Lichtsteuerung und Lichtsteuersystem**
Light control method and system
Procédé de guidage de la lumière et système de guidage de la lumière

(30) Priorität: 09.04.2010 DE 102010003803
(43) Veröffentlichungstag der Anmeldung: 12.10.2011
(73) Patentinhaber: Zumtobel Lighting GmbH, 6850 Dornbirn (AT)
(72) Erfinder: Sejkora, Günther, 6867 Schwarzenberg (AT); Johler, Günther Dipl.-Ing., 6850 Dornbirn (AT); Beecken, Jens, 6850 Dornbirn (AT)
(74) Vertreter: Thun, Clemens

(56) Entgegenhaltungen:
- EP-A1- 0 652 690
- WO-A2-2008/001259

## Beschreibung

Die vorliegende Erfindung betrifft ein Verfahren zur Lichtsteuerung, bei dem mehrere Leuchten angesteuert werden sollen, um in mehreren zu beleuchtenden Bereichen vorgegebene Helligkeitswerte zu erzielen. Ferner betrifft die vorliegende Erfindung ein entsprechendes System zur Durchführung des erfindungsgemäßen Verfahrens.

Die Anforderungen an Beleuchtungseinrichtungen zur Beleuchtung von Räumen oder dergleichen werden immer umfangreicher. Während es in der Vergangenheit ausreichend war, einen Raum mit ausreichender Helligkeit auszuleuchten, besteht nunmehr oftmals das Bedürfnis, einzelne Bereiche des Raums individuell zu beleuchten. Beispielsweise kann gewünscht sein, einen Arbeitsbereich eines Raums mit einer verhältnismäßig hohen Helligkeit zu beleuchten, um hier optimale Arbeitsbedingungen zu schaffen. Ein anderer Bereich wiederum sollte weniger stark ausgeleuchtet werden. Ferner kann gewünscht sein, dass einzelne Objekte, die sich in dem Raum bzw. an dessen Wänden befinden, gezielt ausgeleuchtet werden.

Zum Erfüllen dieser verschiedenen Aufgaben stehen in der Regel mehrere Leuchten zur Verfügung, welche in geeigneter Weise angesteuert werden und insbesondere in ihrer Lichtabgabe beeinflusst werden können. Sollen nunmehr mit einer bestimmten Anzahl von Leuchten mehrere der oben genannten Aufgaben erfüllt werden, so ist zu berücksichtigen, dass die verschiedenen Bereiche, in denen eine gewünschte Helligkeit erzielt werden soll, nicht isoliert betrachtet werden können. Oftmals sind diese Bereiche benachbart oder weisen sogar eine geringfügige Überlappung auf, was zur Folge hat, dass die Beleuchtung eines Bereichs oder Objekts zwangsläufig auch Auswirkungen auf die Beleuchtung des anderen Bereichs hat. Dementsprechend müssen geeignete Stellwerte für die Leuchten gefunden werden, mit denen alle Aufgaben gleichzeitig möglichst gut erfüllt werden können.

Die übliche Vorgehensweise hierzu wäre, eine entsprechende Regelung durchzuführen. Die Istwerte der Beleuchtung in den verschiedenen Bereichen werden hierbei erfasst und dann an eine Steuereinheit übermittelt, welche wiederum Änderungen an den Stellwerten für die Leuchten vornimmt, um Abweichungen von den gewünschten Helligkeits-Sollwerten zu reduzieren. Prinzipiell kann mit einer derartigen Vorgehensweise letztendlich das gewünschte Ergebnis erzielt werden. Es ergibt sich allerdings das Problem, dass im Falle einer derartigen Regelung vor Erreichen des Endzustands starke Schwankungen auftreten können. Dieses sogenannte Einschwingverhalten, welches vorübergehend zu periodischen Veränderungen der Helligkeiten führt, wird als unangenehm empfunden und sollte dementsprechend vermieden werden. Das Dokument EP 652 690 A1 zeigt ein Verfahren bzw. eine Vorrichtung nach der Präambel des Anspruchs 1 bzw. 7. Dementsprechend liegt der vorliegenden Erfindung die Aufgabe zugrunde, eine neuartige Möglichkeit zur Lichtsteuerung anzugeben, welche das oben genannte Problem löst, gleichzeitig allerdings das Auftreten von Helligkeitsschwankungen möglichst unterdrückt.

Die Aufgabe wird durch ein Verfahren zur Lichtsteuerung mit den Merkmalen des Anspruchs 1 sowie durch ein Lichtsteuersystem gemäß Anspruch 8 gelöst. Vorteilhafte Weiterbildungen der Erfindung sind Gegenstand der abhängigen Ansprüche.

Die erfindungsgemäße Lösung beruht auf dem Gedanken, keine klassische Regelung der Helligkeiten vorzunehmen. Stattdessen werden geeignete Stellwerte für die Leuchte rechnerisch ermittelt und erst nach Abschluss der Berechnungen an die Leuchten übermittelt. Wie nachfolgend näher erläutert wird, kann hierdurch das als unangenehm empfundene Einschwingverhalten vermieden werden.

Erfindungsgemäß wird dementsprechend ein Lichtsteuerverfahren zum Ansteuern mehrerer Leuchten vorgeschlagen, wobei das Verfahren dazu vorgesehen ist, in mehreren Bereichen vorgegebene Helligkeitswerte zu erzielen. Das Verfahren weist dabei folgende Schritte auf:
a) Ermitteln der Helligkeits-Istwerte in den zu beleuchtenden Bereichen,
b) Berechnen von Stellwerten für die Leuchten derart, dass die Gesamtheit der Abweichungen der berechneten Helligkeitswerte von den Sollwerten ein Minimum erreicht, und
c) Übermitteln der Stellwerte an die Leuchten.

Die zuvor genannten Schritte b) und c) können dabei wiederholt werden, falls die Abweichungen der sich tatsächlich ergebenden Helligkeitswerte von den Sollwerten eine bestimmte Schwelle oder Grenze überschreiten.

Das Berechnen der Stellwerte in dem oben genannten Schritt b) erfolgt vorzugsweise in zwei Teilschritten, wobei in einem ersten Teilschritt die Stellwerte derart berechnet werden, dass die berechneten bzw. theoretischen Helligkeitswerte jeweils zwischen einem oberen und einem unteren Sollwert liegen. In einem zweiten Teilschritt werden dann die Stellwerte derart modifiziert, dass sich die berechneten Helligkeitswerte jeweils möglichst gut den unteren Sollwerten annähern. Im ersten Schritt wird also darauf geachtet, dass die Anforderungen an die Beleuchtung insgesamt erfüllt werden. Mit dem zweiten Schritt der Annäherung an die unteren Sollwerte wird eine energetische Optimierung erreicht, d.h. der Stromverbrauch insgesamt wird reduziert.

Das Berechnen der Stellwerte erfolgt vorzugsweise im Rahmen eines Iterationsverfahrens, wobei die Stellwerte an die Leuchten erst nach Abschluss des Iterationsverfahrens übermittelt werden. Die einzelnen Iterationsschritte werden dabei auf Basis einer Simulationsberechnung des Systems durchgeführt, wobei hierzu beispielsweise auf Daten zurückgegriffen werden kann, welche in einem Initialisierungsprozess des Systems erhalten wurden. Diese Informationen können allerdings während des weiteren Betriebs des Systems jederzeit aktualisiert werden. Sollte sich beispielsweise herausstellen, dass nach Übermittlung der Stellwerte an die Leuchten Abweichungen von den Sollwerten vorliegen, so können diese bei der Simulation des Systems zu einem späteren Zeitpunkt berücksichtigt werden. Hierdurch wird das Verfahren in einem selbstlernenden Prozess fortgehend optimiert. Auch Veränderungen in der Lichtabgabe der Leuchten, die auf thermische Schwankungen, insbesondere jedoch auf Alterserscheinungen zurückzuführen sind, können auf diesem Wege berücksichtigt und ausgeglichen werden.

Letztendlich können mit dem erfindungsgemäßen Verfahren geeignete Stellwerte für die Leuchte in schneller und zuverlässiger Weise ermittelt werden, ohne dass beim Ansteuern der Leuchten unerwünschte Lichtschwankungen auftreten.

Nachfolgend soll die Erfindung anhand der beiliegenden Zeichnung näher erläutert werden. Es zeigen:
- Figuren 1 und 2: Ansichten eines zu beleuchtenden Raums zur Verdeutlichung des der Erfindung zugrunde liegenden Problems;
- Figur 3a: schematisch den Ablauf des erfindungsgemäßen Verfahrens;
- Figur 3b: den Vergleich der erfindungsgemäßen Vorgehensweise zu einem klassischen Regelungsverfahren;
- Figur 4: ein Schema zur Verdeutlichung der Vorgehensweise beim zweistufigen Berechnen der Stellwerte und
- Figur 5: die Komponenten eines zur Durchführung des erfindungsgemäßen Verfahrens geeigneten Lichtsteuersystems.

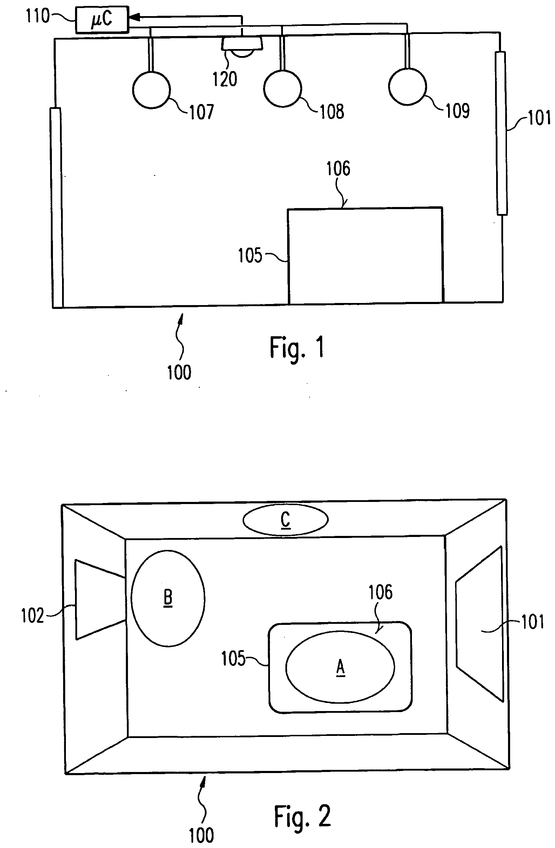

Anhand der Figuren 1 und 2 soll zunächst die der Erfindung zugrunde liegende Problemstellung erläutert werden. Dargestellt ist aus zwei verschiedenen Ansichten ein Raum 100, in dem zur Beleuchtung verschiedener Bereiche drei Leuchten 107, 108 und 109 angeordnet sind. Durch ein Fenster 101 kann zusätzlich Außenlicht in den Raum 100 fallen. Innerhalb des Raums 100 befindet sich ein Tisch 105 mit einer Arbeitsfläche 106.

Verschiedene Bereiche des Raums 100 sollen nun mit Hilfe der Leuchten 107 bis 109 in unterschiedlicher Weise ausgeleuchtet werden. So ist beispielsweise gewünscht, einen ersten Bereich A, der die Arbeitsfläche 106 des Tisches 105 bildet, mit sehr hoher Helligkeit auszuleuchten, um hier optimale Arbeitsbedingungen zu schaffen. Ein zweiter Bereich B hingegen, der sich in der Nähe einer Eingangstür 102 befindet, sollte mit einer niedrigeren Helligkeit ausgeleuchtet werden. Schließlich ist es gewünscht, einen Bereich C an der Wand gezielt mit einer sehr hohen Helligkeit auszuleuchten, um beispielsweise ein in diesem Bereich der Wand angeordnetes Objekt zu beleuchten.

Drei verschiedene Bereiche A, B und C des Raums 100 sollen also mit Hilfe der drei Leuchten 107 bis 109 in unterschiedlicher Weise ausgeleuchtet werden. Hierfür müssen geeignete Stellwerte für die Leuchten 107 bis 109 gefunden werden, um diese Problemstellung zu lösen. Bereits an dieser Stelle sei daraufhingewiesen, dass die vorliegende Erfindung nicht auf solche Systeme beschränkt ist, bei denen die Anzahl der verschiedenen zu beleuchtenden Bereiche genau der Anzahl der Leuchten entspricht. Die Anzahl m der verschiedenen Flächen bzw. Bereiche kann durchaus auch von der Anzahl n der Leuchten abweisen, wobei die Anzahl der Leuchten sowohl größer als auch kleiner der Anzahl der zu beleuchtenden Bereiche sein kann.

Ein entsprechendes Einstellen der Leuchten 107 bis 109 in sinnvoller Weise ist nur dann möglich, wenn Informationen über den aktuellen Zustand der Beleuchtung in den verschiedenen Bereichen erhalten werden. Hierfür ist an der Decke des Raums ein nachfolgend noch näher beschriebener Sensor 120 angeordnet, der geeignete Kontrollinformationen erstellt. Insbesondere erfasst der Sensor 120 die Helligkeits-Istwerte in den drei Bereichen A, B, C. Diese werden an eine Steuereinheit 110 übermittelt, welche dann eine geeignete Ansteuerung der Leuchten 107 bis 109 vornimmt.

In Kenntnis der Helligkeits-Istwerte für die drei Bereiche wäre es möglich, die Stellwerte für die Leuchten 107 bis 109 im Rahmen einer Regelung kontinuierlich zu verändern und die sich hierbei ergebenden Änderungen der Helligkeits-Istwerte zu erfassen. Diese Anpassung der Stellwerte wird so lange durchgeführt, bis letztendlich die Bereiche in der gewünschten Weise beleuchtet werden.

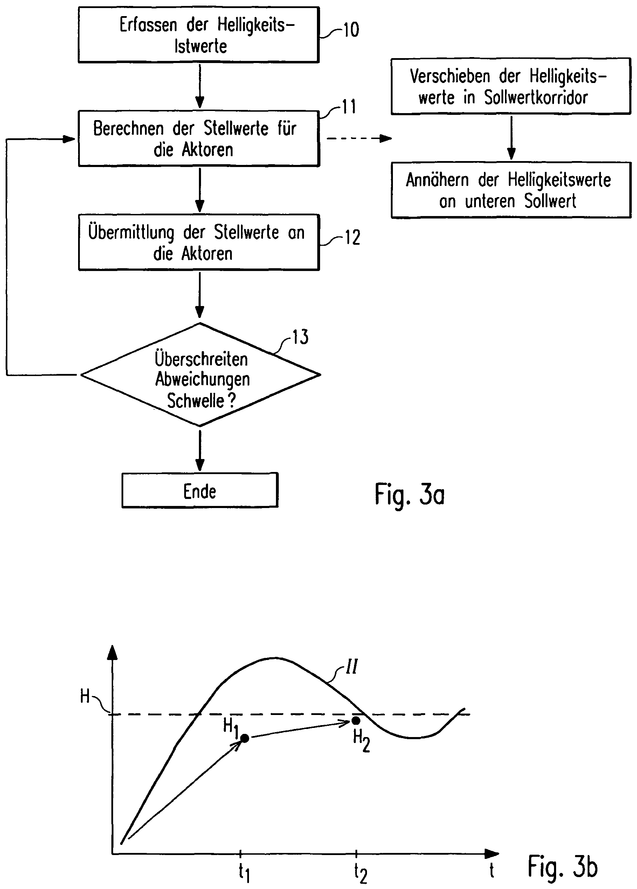

Bei dieser dem Stand der Technik entsprechenden Vorgehensweise ergibt sich allerdings dann üblicherweise ein zeitliches Verhalten des Systems, welches in Figur 3b schematisch anhand der Kurve II dargestellt ist. Diese Kurve II zeigt den zeitlichen Verlauf der Abweichungen der Helligkeitswerte von den Sollwerten. Dargestellt ist im vorliegenden Fall ein einziger Sollwert H, der beispielsweise die gewünschte Ausleuchtung in dem Bereich A symbolisiert. Im Falle einer klassischen Regelung wird sich nunmehr die Helligkeit in dem Bereich A sehr schnell dem gewünschten Sollwert H anpassen, allerdings diesen zunächst überschreiten. Die nachfolgenden Korrekturen führen dann zu dem charakteristischen wellenartigen Verlauf, der als Einschwingverhalten bezeichnet wird und als unangenehm empfunden wird. Mit dem erfindungsgemäßen Verfahren, das nachfolgend näher beschrieben wird, kann dieses Einschwingverhalten nunmehr verhindert werden.

Das schematisch in Figur 3a dargestellte Verfahren besteht in einem ersten Schritt darin, mit Hilfe des zuvor erwähnten Sensors bzw. mehrerer Sensoren 120 die Helligkeits-Istwerte in den Bereichen A, B und C zu ermitteln. In diesem ersten Schritt 10 wird also der aktuelle Zustand des Systems festgestellt. Nachfolgend schließt sich der zentrale Schritt 11 des Verfahrens an, in dem auf Basis der Helligkeits-Istwerte geeignete Stellwerte für die Leuchten berechnet werden, derart, dass die Gesamtheit der Abweichungen der rechnerisch ermittelten Helligkeitswerte für die Bereiche von den Sollwerten ein Minimum erreicht. Nach diesem Schritt, der nachfolgend noch näher beschrieben wird, werden in Schritt 12 die Stellwerte an die Leuchten übermittelt.

In Figur 3b erfolgt dementsprechend zum Zeitpunkt t₁ eine Übermittlung der Stellwerte, sodass sich dann eine Beleuchtung ergibt, die zu dem Helligkeitswert H₁ führt. In einer Basisvariante wäre hiermit das Verfahren abgeschlossen.

Aufgrund von äußeren Einflüssen und/oder Alterungserscheinungen der Leuchten oder Lichtquellen kann allerdings nicht ausgeschlossen werden, dass noch eine Abweichung der letztendlich erzielten Helligkeitswerte von den Sollwerten vorliegt. In dem nachfolgenden Schritt 13 kann dementsprechend eine Überprüfung stattfinden, wobei wiederum die Helligkeits-Istwerte erfasst und mit den Sollwerten verglichen werden.

Stellt sich heraus, dass die Abweichungen eine gewisse Schwelle oder Grenze überschreiten, können die Schritte 11 und 12 wiederholt werden, d.h. zum Zeitpunkt t₂ werden korrigierte Stellwerte an die Leuchten übermittelt, sodass sich nunmehr der Helligkeitswert H₂ ergibt. Wird bei der nachfolgenden Überprüfung 13 festgestellt, dass nunmehr die Helligkeits-Istwerte hinreichend gut mit den Sollwerten übereinstimmen, wird das Verfahren beendet.

Die zuvor erwähnte Schleife könnte im Prinzip mehrfach durchlaufen werden, allerdings dürften bereits nach ein oder zwei Durchgängen die Abweichungen derart gering sein, dass keine weitere Anpassung erforderlich ist. Ein Vergleich zu Kurve II zeigt unmittelbar, dass bei der Durchführung des Verfahrens kein Einschwingverhalten vorliegt, sondern stattdessen in wenigen Schritten die Helligkeiten auf die gewünschten Werte eingestellt werden.

Das Berechnen der Stellwerte in Schritt 11 erfolgt vorzugsweise durch Verwendung eines iterativen Optimierungsalgorithmus. Dabei ist insbesondere vorgesehen, dass das Verhalten des Systems durch eine Simulationsrechnung nach jedem Iterationsschritt prognostiziert wird. Erst wenn das System in dieser rechnerischen Simulation eingeschwungen ist, werden die Stellwerte an die Leuchten übergeben. Diese Vorgehensweise führt sehr effektiv zu den gewünschten Ergebnissen. Bei der Durchführung der Simulationsrechnung kann dabei insbesondere auf frühere Erkenntnisse des Verhaltens des Systems zurückgegriffen werden. Diese Erkenntnisse bzw. Informationen können beispielsweise im Rahmen einer Initialisierung des Systems gewonnen werden. Dabei werden durch die Steuereinheit die verschiedenen Leuchten bei verschiedenen Stellwerten angesteuert und die sich hierbei ergebenden Veränderungen der Beleuchtung in den verschiedenen Bereichen erfasst und analysiert. Ferner können hierbei auch die Erkenntnisse im Rahmen des Überprüfungsschritts 13 berücksichtigt werden. Wird beispielsweise festgestellt, dass bei Durchführung der Simulation grundsätzlich in einem Bereich die Helligkeit zu niedrig ist, so kann das Simulationsmodell in geeigneter Weise angepasst werden, um bei einer Durchführung des Verfahrens zu einem späteren Zeitpunkt bessere Ergebnisse zu erhalten. Auf diesem Wege wird quasi ein selbstlernendes System gebildet, welches zum effektiven Berechnen der erforderlichen Stellwerte geeignet ist.

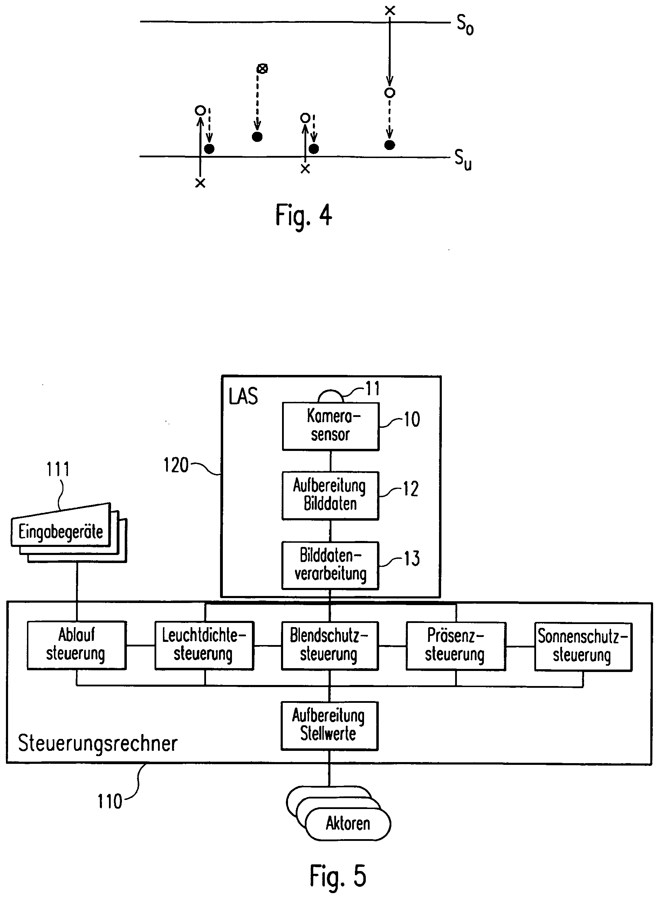

Eine Weiterbildung des Verfahrens, insbesondere des Berechnungsschritts 11 ist schematisch in Figur 4 dargestellt. Hierbei wird die Berechnung der Stellwerte in zeitlich zwei aufeinanderfolgende Phasen unterteilt. In einem ersten Schritt, dargestellt durch die durchgängigen Pfeile, erfolgt dabei eine Berechnung der Stellwerte derart, dass die sich rechnerisch ergebenden Helligkeitswerte ausgehend von dem Istzustand (dargestellt durch x) zu einem ersten berechneten Wert verändern. Hierbei wird darauf geachtet, dass dieser erste berechnete Wert (dargestellt durch o) innerhalb eines Sollwert-Korridors liegt, der durch einen oberen Sollwert Sₒ und einen unteren Sollwert Sᵤ definiert wird. In diesem ersten Schritt der Optimierung werden also die Stellwerte so berechnet, dass alle prognostizierten Helligkeitswerte zwischen den beiden Sollwerten liegen. Auf diese Weise soll zunächst sichergestellt werden, dass die Lichtqualität, also die erzielte Beleuchtung den durch die Sollwerte definierten Anforderungen entspricht.

In einem zweiten Schritt, dargestellt durch die gestrichelten Pfeile, werden dann die Stellwerte weiter dahingehend optimiert, dass sich die endgültigen berechneten bzw. prognostizierten Helligkeitswerte (dargestellt durch ●) an den unteren Sollwert annähern, insbesondere möglichst nah an diesen Sollwert kommen. Dies bedeutet letztendlich, dass die einzelnen Helligkeitswerte soweit wie möglich innerhalb des zulässigen Bereichs reduziert werden, was letztendlich einen reduzierten Energieverbrauch nach sich zieht. Auch in diesem Fall wird selbstverständlich erst nach Beendigung der zweiten Phase eine Übermittlung der Stellwerte an die Leuchten vorgenommen.

Anzumerken ist, dass das Verfahren nicht auf die ausschließliche Ansteuerung von Leuchten beschränkt ist Beispielsweise könnten in diesem Zusammenhang auch Stellwerte für Blendschutzeinrichtungen, insbesondere die an dem Fenster 101 befindliche Jalousie ermittelt werden. Auch der Einfluss dieser Jalousie kann im Rahmen der Simulationsrechnung berücksichtigt werden.

In Figur 5 schließlich ist schematisch eine besonders bevorzugte Ausführungsform eines Lichtsteuersystems dargestellt, welches zur Durchführung des Verfahrens herangezogen wird. Die Besonderheit besteht dabei insbesondere in Ausgestaltung des Sensors 120, der in der Lage ist, die Helligkeits-Istwerte mehrerer Bereiche zu erfassen. Dies wird dadurch ermöglicht, dass der Sensor 120 einen bildgebenden Digitalsensor 10 mit einer zugehörigen Optik 11 aufweist. D.h., der Sensor 120 erfasst im Idealfall ein Bild des gesamten Raums (welches beispielsweise der Darstellung in Figur 2 entspricht) und analysiert die entsprechenden Bilddaten um die gewünschten Istwerte zu erhalten. Die digitalen Bilddaten können hierbei zunächst durch eine weitere Einheit 12 in geeigneter Weise aufbereitet werden. Anschließend werden von einer Bilddatenverarbeitungseinheit 13 dann diejenigen Daten analysiert, welche den zu bewertenden Bereichen A, B und C zugeordnet sind. Es wird also im Idealfall nicht das vollständige Bild, welches von dem digitalen Sensor 10 erfasst wird, bewertet. Lediglich die ausgewählten Bereiche müssen analysiert werden, um die geeigneten Istwerte zu ermitteln. Dabei kann es sich sowohl um Helligkeits- als auch um Farbwerte handeln, je nachdem, ob der bildgebende Digitalsensor ein monokromer Sensor oder ein RGB-Sensor ist.

Anstelle einer Vielzahl einzelner Sensoren, welche jeweils auf die Bereiche A, B und C gerichtet sind, kann also lediglich eine einzelne Sensoreinheit 120 verwenden werden, um die erforderlichen Informationen hinsichtlich des Istzustands des Systems zu erhalten. Diese Kontrollinformationen werden dann an die Steuereinheit 110 übermittelt, welche in der oben beschriebenen Weise auf Basis dieser Daten Stellwerte für die Leuchten und Jalousien bzw. allgemein für die Aktoren berechnet und an diese übermittelt. Die Sollwerte für die einzelnen Bereiche können beispielsweise durch manuelle Eingabegeräte 111 vorgegeben werden, welche ebenfalls mit der Steuereinheit 110 verbunden sind. Selbstverständlich wäre es auch möglich, anstelle der zuvor beschriebenen multifunktionalen Sensoreinheit jeweils einzelne Sensoren einzusetzen. Die Funktionsweise der Steuereinheit würde hierdurch nicht beeinflusst werden, da es für diese unerheblich ist, ob die Kontrollinformationen bzw. die Istwerte für die Helligkeiten in den einzelnen Bereichen von einer einzigen Einheit oder mehreren Sensoren geliefert werden.

## Patentansprüche

1. Lichtsteuerverfahren zum Ansteuern mehrerer Leuchten (107, 108, 109), um in mehreren Bereichen (A, B, C) vorgegebene Helligkeitswerte zu erzielen, aufweisend:
a) Ermitteln der Helligkeits-Istwerte in den zu beleuchtenden Bereichen (A, B, C),
b) Berechnen von Stellwerten für die Leuchten (107, 108, 109) derart, dass die Gesamtheit der Abweichungen der berechneten Helligkeitswerte von den Sollwerten ein Minimum erreicht,
c) Übermitteln der Stellwerte an die Leuchten (107, 108, 109),
**dadurch gekennzeichnet,**
**dass** das Berechnen der Stellwerte in Schritt b) in zwei Teilschritten erfolgt, wobei
• in einem ersten Teilschritt die Stellwerte derart berechnet werden, dass die berechneten Helligkeitswerte jeweils zwischen einem oberen und einem unteren Sollwert liegen, und
• in einem zweiten Teilschritt die Stellwerte derart modifiziert werden, dass sich die berechneten Helligkeitswerte möglichst gut den unteren Sollwerten annähern.

2. Lichtsteuerverfahren nach Anspruch 1,
**dadurch gekennzeichnet,**
**dass** die Schritte b) und c) wiederholt werden, wenn die Abweichung der sich tatsächlich ergebenden Helligkeitswerte von den Sollwerten eine Schwelle überschreitet.

3. Verfahren nach einem der vorherigen Ansprüche,
**dadurch gekennzeichnet,**
**dass** die Berechnung der Stellwerte im Rahmen eines Iterationsverfahrens erfolgt, wobei die Stellwerte an die Leuchten (107, 108, 109) erst nach Abschluss des Iterationsverfahrens übermittelt werden.

4. Verfahren nach Anspruch 3,
**dadurch gekennzeichnet,**
**dass** die einzelnen Iterationsschritte im Rahmen einer Simulationsberechnung des Systems erfolgen.

5. Verfahren nach Anspruch 4,
**dadurch gekennzeichnet,**
**dass** der Simulationsberechnung in einem Initialisierungsprozeß erfasste Daten zugrunde gelegt werden.

6. Verfahren nach Anspruch 4 oder 5,
**dadurch gekennzeichnet,**
**dass** nach Übermittlung der Stellwerte an die Leuchten (107, 108, 109) vorliegende Abweichungen von den Sollwerten erfaßt und bei der Simulationsberechnung berücksichtigt werden.

7. Lichtsteuersystem zum Ansteuern mehrerer Leuchten (107, 108, 109), um in mehreren Bereichen (A, B, C) vorgegebene Helligkeitswerte zu erzielen, aufweisend:
a) Sensormittel (120) zum Ermitteln der Helligkeits-Istwerte in den zu beleuchtenden Bereichen (A, B, C) sowie
b) eine Steuereinheit (110), welche dazu ausgebildet ist,
• Stellwerte für die Leuchten (107, 108, 109) derart zu berechnen, dass die Gesamtheit der Abweichungen der berechneten Helligkeitswerte von den Sollwerten ein Minimum erreicht, und
• die berechneten Stellwerte an die Leuchten (107, 108, 109) zu übermitteln,
**dadurch gekennzeichnet,**
**dass** das Berechnen der Stellwerte in zwei Teilschritten erfolgt, wobei
• in einem ersten Teilschritt die Stellwerte derart berechnet werden, dass die berechneten Helligkeitswerte jeweils zwischen einem oberen und einem unteren Sollwert liegen, und
• in einem zweiten Teilschritt die Stellwerte derart modifiziert werden, dass sich die berechneten Helligkeitswerte möglichst gut den unteren Sollwerten annähern.

## Claims

1. Lighting control method for controlling a plurality of luminaires (107, 108, 109) in order to achieve predetermined brightness values in a plurality of areas (A, B, C), comprising:
a) determining the actual brightness values in the areas (A, B, C) to be illuminated,
b) calculating control values for the luminaires (107, 108, 109) in such a way that the totality of the deviations of the calculated brightness values from the set values reaches a minimum,
c) transmitting the control values to the luminaires (107, 108, 109),
**characterized in that**
the control values in step b) are calculated in two sub-steps, wherein:
• in a first sub-step, the control values are so calculated that the calculated brightness values respectively lie between an upper and a lower set value, and
• in a second sub-step, the control values are so modified that the calculated brightness values approach the lower set values as closely as possible.

2. Lighting control method according to claim 1,
**characterized in that**
the steps b) and c) are repeated when the deviation of the resulting actual brightness values from the set values exceeds a given threshold.

3. Method according to one of the preceding claims,
**characterized in that**
the calculation of the control values is effected by means of an iteration process, wherein the control values are only transmitted to the luminaires (107, 108, 109) after the iteration process has been completed.

4. Method according to claim 3,
**characterized in that**
the individual iteration steps are carried out as part of a simulation calculation of the system.

5. Method according to claim 4,
**characterized in that**
the simulation calculation is based on data recorded in an initialization process.

6. Method according to claim 4 or 5,
**characterized in that**
after transmission of the control values to the luminaires (107, 108, 109), deviations from the set values are detected and taken into account during the simulation calculation.

7. Lighting control system for controlling a plurality of luminaires (107, 108, 109) in order to achieve predetermined brightness values in a plurality of areas (A, B, C), comprising:
a) sensor means (120) for determining the actual brightness values in the areas (A, B, C) to be illuminated, as well as
b) a control unit (110) which is configured:
• to calculate control values for the luminaires (107, 108, 109), so that the totality of the deviations of the calculated brightness values from the set values reaches a minimum, and
• to transmit the calculated control values to the luminaires (107, 108, 109),
**characterized in that**
the control values are calculated in two sub-steps, wherein:
• in a first sub-step, the control values are so calculated that the calculated brightness values respectively lie between an upper and a lower set value, and
• in a second sub-step, the control values are so modified that the calculated brightness values approach the lower set values as closely as possible.

## Revendications

1. Procédé de commande d'éclairage pour la commande de plusieurs luminaires (107, 108, 109) afin d'obtenir des valeurs de luminosité prédéterminées dans plusieurs zones (A, B, C), comprenant :
a) la détermination des valeurs réelles de luminosité dans les zones (A, B, C) à éclairer,
b) le calcul des valeurs de réglage pour les luminaires (107, 108, 109) de façon à ce que l'ensemble des écarts entre les valeurs de luminosité calculées et les valeurs de consigne atteigne un minimum,
c) la transmission des valeurs de réglage aux luminaires (107, 108, 109), **caractérisé en ce que**
le calcul des valeurs de réglage a lieu à l'étape b) en deux étapes partielles,
• dans une première étape partielle, les valeurs de réglage étant calculées de façon à ce que les valeurs de luminosité calculées se trouvent entre une valeur de consigne supérieure et une valeur de consigne inférieure et
• dans une deuxième étape partielle, les valeurs de réglage étant modifiées de façon à ce que les valeurs de luminosité calculées se rapprochent le plus possible des valeurs de consigne inférieures.

2. Procédé de commande d'éclairage selon la revendication 1,
**caractérisé en ce que**
les étapes b) et c) sont répétées lorsque l'écart entre les valeurs de luminosité effectives et les valeurs de consigne dépasse un seuil.

3. Procédé selon l'une des revendications précédentes,
**caractérisé en ce que**
le calcul des valeurs de réglage a lieu dans le cadre d'un procédé par itération, les valeurs de réglage étant transmises aux luminaires (107, 108, 109) seulement après la fin du procédé par itération.

4. Procédé selon la revendication 3,
**caractérisé en ce que**
les différentes étapes d'itération ont lieu dans le cadre d'un calcul de simulation du système.

5. Procédé selon la revendication 4,
**caractérisé en ce que**
le calcul de simulation est basé sur des données relevées lors d'un processus d'itération.

6. Procédé selon la revendication 4 ou 5,
**caractérisé en ce que**
après la transmission des valeurs de réglage aux luminaires (107, 108, 109), les écarts existants par rapport aux valeurs de réglage sont mesurés et pris en compte lors du calcul de simulation.

7. Système de commande d'éclairage pour la commande de plusieurs luminaires (107, 108, 109), afin d'obtenir des valeurs de luminosité prédéterminées dans plusieurs zones (A, B, C), comprenant :
a) des moyens de capteurs (120) pour la détermination des valeurs de luminosité réelles dans les zones (A, B, C) à éclairer ainsi que
b) une unité de commande (110) qui est conçue pour
• calculer des valeurs de réglage pour les luminaires (107, 108, 109) de façon à ce que l'ensemble des écarts entre les valeurs de luminosité calculées et les valeurs de consigne atteigne un minimum et
• transmettre les valeurs de réglage calculées aux luminaires (107, 108, 109), **caractérisé en ce que**
le calcul des valeurs de réglage a lieu en deux étapes partielles,
• dans une première étape partielle, les valeurs de réglage étant calculées de façon à ce que les valeurs de luminosité calculées se trouvent entre une valeur de consigne supérieure et une valeur de consigne inférieure et
• dans une deuxième étape partielle, les valeurs de réglage étant modifiées de façon à ce que les valeurs de luminosité calculées se rapprochent le plus possible des valeurs de consigne inférieures.
